(19) **Europäisches Patentamt**

**European Patent Office**

**Office européen des brevets**

(11) **EP 1 415 096 B1**

(12) **EUROPÄISCHE PATENTSCHRIFT**

(45) Veröffentlichungstag und Bekanntmachung des Hinweises auf die Patenterteilung:
**20.04.2005 Patentblatt 2005/16**

(21) Anmeldenummer: **02794580.7**

(22) Anmeldetag: **07.08.2002**

(51) Int Cl.⁷: **F16B 4/00**

(86) Internationale Anmeldenummer:
**PCT/EP2002/008844**

(87) Internationale Veröffentlichungsnummer:
**WO 2003/014581 (20.02.2003 Gazette 2003/08)**

(54) **BAUTEILVERBUND, INSBESONDERE VENTIL, UND VERFAHREN ZUR HERSTELLUNG DESSELBEN**

COMPOSITE COMPONENT, IN PARTICULAR VALVE AND METHOD FOR PRODUCTION THEREOF

PIECE COMPOSITE, NOTAMMENT SOUPAPE ET PROCEDE PERMETTANT DE LA PRODUIRE

(84) Benannte Vertragsstaaten:
**AT BE BG CH CY CZ DE DK EE ES FI FR GB GR IE IT LI LU MC NL PT SE SK TR**

(30) Priorität: **10.08.2001 DE 10139499**

(43) Veröffentlichungstag der Anmeldung:
**06.05.2004 Patentblatt 2004/19**

(73) Patentinhaber: **Lucas Automotive GmbH**
**56070 Koblenz (DE)**

(72) Erfinder: **WARSAKIS, Thanassis**
**56182 Urbar (DE)**

(74) Vertreter: **Röthinger, Rainer, Dipl.-Phys.**
**c/o Wuesthoff & Wuesthoff**
**Patent- und Rechtsanwälte**
**Schweigerstrasse 2**
**81541 München (DE)**

(56) Entgegenhaltungen:
**US-A- 4 856 970**        **US-A- 4 893 650**

## Beschreibung

Die Erfindung betrifft einen Bauteilverbund, insbesondere ein Ventil, mit einem inneren Bauteil und einem das innere Bauteil radial außen umgebenden äußeren Bauteil, wobei die beiden Bauteile mittels eines Presssitzes miteinander verbunden sind. Die Erfindung betrifft weiterhin ein Verfahren zur Herstellung des Bauteilverbunds.

Bei einem derartigen Bauteilverbund muss eine sichere Verbindung zwischen dem inneren Bauteil und dem äußeren Bauteil häufig über einen weiten Temperaturbereich hinweg und auch im Fall betriebsbedingter Erschütterungen oder Vibrationen gewährleistet sein. Zur Verhinderung eines unbeabsichtigten Lösens der beiden Bauteile ist es daher in der Regel erforderlich, zum Ausbilden des Presssitzes das innere Bauteil mit vergleichsweise hohen Kräften in das äußere Bauteil einzupressen. Aufgrund der hohen Einpresskräfte kommt es bei der Ausbildung des Presssitzes jedoch häufig zu Beschädigungen eines der Bauteile oder sogar beider Bauteile. Derartige Beschädigungen werden teilweise in Kauf genommen, da geringere Einpresskräfte mit der Gefahr eines unbeabsichtigten Lösens der beiden Bauteile verbunden wären.

Anstatt mittels eines Presssitzes könnte das innere Bauteil auch mittels einer anderen Verbindungstechnik an dem äußeren Bauteil befestigt werden. So könnte beispielsweise daran gedacht werden, am inneren Bauteil Schnappelemente vorzusehen, welche zur Befestigung des inneren Bauteils am äußeren Bauteil mit korrespondierenden Ausnehmungen des äußeren Bauteils in Eingriff gebracht werden.

Auch derartige Schnappverbindungen sind jedoch mit Nachteilen behaftet. So können beim in Eingriff bringen der Schnappelemente Verunreinigungen in Gestalt von abgescherten Spänen entstehen, welche die Funktion des Bauteilverbunds nachhaltig beeinträchtigen. Bei Ventilen beispielsweise können sich die Späne im Bereich zwischen einem Ventilsitz und einem Ventilelement ablagern und zu Undichtigkeiten führen. Aus diesem Grund, und aus anderen Gründen, erscheint es daher oftmals vorteilhaft, das Verbindungskonzept eines Presssitzes beizubehalen.

Aus der US 4,856,970 ist ein metall-keramischer Bauteilverbund mit einem keramischen inneren Bauteil und einem das innere Bauteil radial außen umgebenden metallischen äußeren Bauteil bekannt. Das metallische äußere Bauteil umfasst einen sich konisch verjüngenden Einführungsabschnitt für das keramische innere Bauteil. Die beiden Bauteile sind mittels eines Presssitzes miteinander verbunden.

Der Erfindung liegt die Aufgabe zugrunde, einen Bauteilverbund, insbesondere ein Ventil, sowie ein Verfahren zum Fertigen des Bauteilverbunds anzugeben, bei welchen zwischen einem inneren Bauteil und einem äußeren Bauteil ein Presssitz ausgebildet wird, wobei aber die inhärenten Nachteile des Presssitzes nicht oder nur vermindert auftreten.

Diese Aufgabe wird erfindungsgemäß durch einen Bauteilverbund, insbesondere ein Ventil, gelöst, mit einem inneren Bauteil und einem das innere Bauteil radial außen umgebenden äußeren Bauteil, wobei das innere Bauteil zumindest radial außen aus einem Material mit einem ersten thermischen Ausdehnungskoeffizienten und das äußere Bauteil zumindest radial innen aus einem Material mit einem zweiten thermischen Ausdehnungskoeffizienten, der geringer ist als der erste thermische Ausdehnungskoeffizient, gefertigt ist, und wobei das äußere Bauteil radial innen mindestens eine, dem inneren Bauteil zugewandte Durchmessererweiterung besitzt und das innere Bauteil einerseits mittels eines Presssitzes und andererseits mittels eines Formschlusses, welcher durch wärmeinduziertes Fließen des inneren Bauteils in die Innendurchmessererweiterung des äußeren Bauteils ausgebildet ist, mit dem äußeren Bauteil verbunden ist.

Die erfindungsgemäße Kombination von Presssitz und Formschluss hat den Vorteil, dass die zum Ausbilden des Presssitzes erforderlichen Einpresskräfte deutlich reduziert werden können und der Bauteilverbund trotzdem aufgrund der zusätzlichen formschlüssigen Verbindung zwischen innerem und äußerem Bauteil eine hervorragende Stabilität aufweist.

Um ein unbeabsichtigtes Lösen der formschlüssigen Verbindung zwischen dem inneren und dem äußeren Bauteil, d.h. beispielsweise ein Herausziehen des inneren Bauteils aus dem äußeren Bauteil, zu verhindern, ist die mindestens eine Innendurchmessererweiterung zweckmäßigerweise zumindest in Abschnitten von Bereichen mit geringerem Innendurchmesser umgeben. So kann das äußere Bauteil radial innen einen in Einpressrichtung bereichsweise zunehmenden Innendurchmesser besitzen. Dies ist z.B. dann der Fall, wenn die mindestens eine Durchmessererweiterung eine in Richtung des Innenumfangs des äußeren Bauteils verlaufende, bereichsweise ausgebildete oder vollständig umlaufende Nut ist. Anstatt nutartiger Innendurchmessererweiterungen oder zusätzlich zu nutartigen Innendurchmessererweiterungen können auch anders geformte Innendurchmessererweiterungen zum Einsatz gelangen. So kann daran gedacht werden, Innendurchmessererweiterungen in Gestalt von Bohrungen vorzusehen, welche eine Wandung des äußeren Bauteils durchsetzen. Die einzelnen Innendurchmessererweiterungen können relativ zueinander bezüglich einer Längsachse des äußeren Bauteils, d.h. in axialer Richtung, versetzt angeordnet sein.

Das innere Bauteil und/oder das äußere Bauteil können in Umfangsrichtung eine nicht-geschlossene, beispielsweise geschlitzte oder mit Durchbrechungen versehene Kontur besitzen. Aus Stabilitätsgründen ist jedoch eine vollständig oder zumindest weitestgehend geschlossene Kontur bevorzugt. Das innere und/oder das äußere Bauteil können im Wesentlichen zylindrisch oder ringförmig ausgebildet sein. Es ist aber auch möglich, konische, topfförmige, usw. Bauteile vorzusehen. Das innere und/oder das äußere Bauteil besitzen vorzugsweise einen kreisringförmigen Querschnitt. Andere Querschnitte sind jedoch gleichfalls denkbar. So ist es möglich, innere und/oder äußere Bauteile mit im Wesentlichen dreieckigem, viereckigem, ovalem, usw. Querschnitt vorzusehen.

Das innerer Bauteil kann koaxial oder außermittig bezüglich des äußeren Bauteils angeordnet sein. Eine besonders stabile Verbindung von innerem und äußerem Bauteil ist bei einer koaxialen Anordnung gewährleistet.

Wie bereits erwähnt, weist das äußere Bauteil einen geringeren thermischen Ausdehnungskoeffizienten $\alpha$ als das innere Bauteil auf. Der Ausdehnungskoeffizient $\alpha$ eines festen Stoffes ist definiert durch die Beziehung

$$\frac{\Delta l}{l} = \alpha \cdot \Delta T$$

Der Ausdehnungskoeffizient $\alpha$ ist also der Proportionalitätsfaktor zwischen der temperaturdifferenzinduzierten relativen Verlängerung $\Delta l/l$ und der Temperaturdifferenz $\Delta T$.

Der Ausdehnungskoeffizient $\alpha_a$ des äußeren Bauteils ist vorzugsweise geringer als ca. $12 \cdot 10^{-6} \cdot K^{-1}$ und liegt insbesondere in einer Größenordnung von ca. $10 \cdot 10^{-6} \cdot K^{-1}$. Der Ausdehnungskoeffizient $\alpha_i$ des inneren Bauteils ist vorzugsweise größer als ca. $13 \cdot 10^{-6} \cdot K^{-1}$ und liegt insbesondere in einer Größenordnung von ca. $14 \cdot 10^{-6} \cdot K^{-1}$. Gemäß einer bevorzugten Ausführungsform ist das äußere Bauteil zumindest radial innen aus Metall gefertigt und das innere Bauteil zumindest radial außen aus Kunststoff.

Obwohl der erfindungsgemäße Bauteilverbund in unterschiedlichsten technischen Bereichen eingesetzt werden kann, ist der Bauteilverbund vorzugsweise Teil eines Ventils. In diesem Fall kann das äußere Bauteil beispielsweise ein Ventilkörper sein, welcher innen und/oder außen einen Ventilsitz aufweist. Das Ventil kann weiterhin ein mit diesem Ventilsitz zusammenwirkendes Ventilelement umfassen. Es kann daran gedacht werden, das Ventilelement mittels eines elastischen Elements gegen den Ventilsitz vorzuspannen. Wenn der Ventilsitz im Inneren des Ventilkörpers ausgebildet ist, kann das innere Bauteil die Gestalt eines Käfigs haben, wobei sich das elastische Element einerseits am Käfig und andererseits am Ventilelement abstützt.

Zur Fertigung des erfindungsgemäßen Bauteilverbundes werden in einem ersten Schritt die beiden Bauteile durch Einpressen des inneren Bauteils in das äußere Bauteil miteinander verbunden. Es wird also zunächst der Presssitz ausgebildet. In einem zweiten Schritt erfolgt das Ausbilden der formschlüssigen Verbindung. Dies geschieht durch Erwärmen der beiden mittels des Presssitzes verbundenen Bauteile derart, dass das innere Bauteil zumindest bereichsweise in die Innendurchmessererweiterung des äußeren Bauteils fließt. Dieses Fließen wird synergistisch unterstützt durch den bereits vorher ausgebildeten Presssitz, so dass der Bauteilverbund nicht übermäßig stark erwärmt werden muss.

Das Erwärmen der verbundenen Bauteile zum Ausbilden des Formschlusses erfolgt vorteilhafterweise im Rahmen der Inbetriebnahme des Bauteilverbundes, also dann, wenn der Bauteilverbund zum ersten Mal auf Betriebstemperatur gebracht wird. Wenn es sich bei dem Bauteilverbund um ein Ventil handelt, kann die für das Ausbilden des Formschlusses erforderliche Erwärmung des Ventils von einem erwärmten fluiden Medium induziert sein, mit welchem das Ventil beaufschlagt wird. Zweckmäßigerweise liegt die Betriebstemperatur des Bauteilverbunds über 70°C und vorzugsweise über 80°C. Anstatt den Formschluss erst während der Inbetriebnahme des Bauteilverbundes auszubilden, kann auch daran gedacht werden, einen separaten Erwärmungsschritt vor der eigentlichen Inbetriebnahme vorzusehen.

Die Einpresskraft sollte in Abhängigkeit von den Materialien des inneren und äußeren Bauteils einerseits derart gering gewählt werden, dass der Presssitz beschädigungslos ausgebildet wird. Andererseits sollte die Einpresskraft ausreichend hoch gewählt werden, um in einem unteren Temperaturbereich, welcher vorzugsweise unter 80°C und insbesondere unter 70°C liegt, einen sicheren Presssitz zu gewährleisten. Für den oben erläuterten Fall, dass die Verbindung zwischen den inneren und dem äußeren Bauteil zusätzlich von einem unter Vorspannung stehenden elastischen Element belastet wird, muss die Einpresskraft entsprechend gesteigert werden. Gemäß einer bevorzugten Ausführungsform sind die Charakteristika des Presssitzes und des Formschlusses derart gewählt, dass in einem Temperaturbereich von -40°C bis 125 °C eine zuverlässige Verbindung zwischen den inneren und dem äußeren Bauteil gewährleistet wird.

Weitere Vorteile und Einzelheiten der Erfindung ergeben sich aus der nachfolgenden Beschreibung eines Ausführungsbeispiels sowie aus den Figuren. Es zeigt:

Fig. 1 ein Ausführungsbeispiel eines erfindungsgemäßen Ventils vor dem Zusammenbau;

Fig. 2 das Ventil gemäß Fig. 1 in teilmontiertem Zustand nach dem Ausbilden eines Presssitzes; und

Fig. 3 das Ventil gemäß Fig. 2 nach dem Erwärmen und Ausbilden eines Formschlusses.

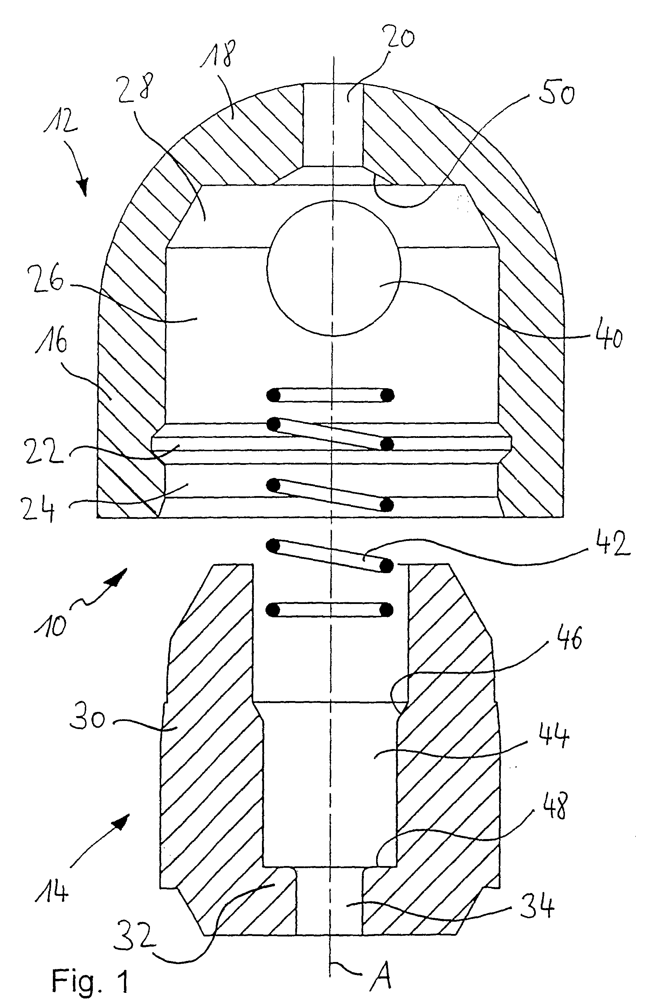

In Fig. 1 ist ein Ausführungsbeispiel eines erfindungsgemäßen Bauteilverbunds in Gestalt eines Ventils 10 in nicht montiertem Zustand dargestellt. Das Ventil 10 umfasst als äußeres Bauteil einen Ventilkörper 12 und als inneres Bauteil einen Federkäfig 14.

Der aus Stahl ($\alpha_a = 10 \cdot 10^{-6} \cdot K^{-1}$) gefertigte Ventilkörper 12 besitzt einen hohlzylindrischen Abschnitt 16, welcher in Einführrichtung des Federkäfigs 14 in den Ventilkörper 12 in einen kalottenförmigen Abschnitt 18 übergeht. Im kalottenförmigen Abschnitt 18 ist entlang einer Längsachse A des Ventils 10 eine zylindrische Durchtrittsöffnung 20 ausgebildet.

Der Ventilkörper 12 besitzt radial innen im Bereich des zylindrischen Abschnitts 16 eine durchgehende, in Umfangsrichtung verlaufende Innendurchmessererweiterung in Form einer trapezförmigen Nut 22. Die Nut 22 ist zwischen zwei Abschnitten 24, 26 des Ventilkörpers 12 mit im Vergleich zur Nut 22 reduziertem Innendurchmesser angeordnet. Derjenige Abschnitt 26, welcher der Durchtrittsöffnung 20 zugewandt ist, mündet in einen konischen Abschnitt 28 mit in Einpressrichtung abnehmendem Innendurchmesser.

Koaxial zum Ventilkörper 12 ist der aus Kunststoff ($\alpha_i = 14 \cdot 10^{-6} \cdot K^{-1}$) gefertigte Federkäfig 14 angeordnet. Der Federkäfig 14 besitzt einen im Wesentlichen zylindrischen Abschnitt 30, welcher auf seiner dem Ventilkörper 12 abgewandten Seite von einem Innenflansch 32 abgeschlossen ist. Der Innenflansch 32 verschließt den Federkäfig 30 an seiner dem Ventilkörper 12 abgewandten Seite jedoch nicht vollständig, sondern lässt eine sich entlang der Längsachse A erstreckende Durchtrittsöffnung 34 offen.

Das in Fig. 1 dargestellte Ventil 10 umfasst weiterhin ein Ventilelement in Gestalt einer Kugel 40 sowie ein elastisches Element in Form einer Schraubenfeder 42. Im montierten Zustand des Ventils 10 sind die Kugel 40 und die Schraubenfeder 42 beide in einer zentralen Aufnahmeöffnung 44 des Federkäfigs 14 angeordnet. Die Aufnahmeöffnung 44 besitzt einen entgegen der Einpressrichtung stufenartig abnehmenden Innendurchmesser, wobei eine Stufe 46 in Gestalt eines konischen Abschnittes die axiale Beweglichkeit der Kugel 40 entgegen der Einpressrichtung begrenzt.

Im montierten Zustand des Ventils 10 stützt sich die Schraubenfeder 42 einerseits an einer dem Ventilkörper 12 zugewandten Stirnfläche 48 des Innenflansches 32 und andererseits an der Kugel 40 ab. Die Kugel 40 wird dabei von der Schraubenfeder 42 in Betätigungsrichtung gegen einen auf der Innenseite des kalottenförmigen Abschnitts 18 des Ventilkörpers 12 ausgebildeten und in die Durchtrittsöffnung 20 mündenden Ventilsitz 50 elastisch vorgespannt.

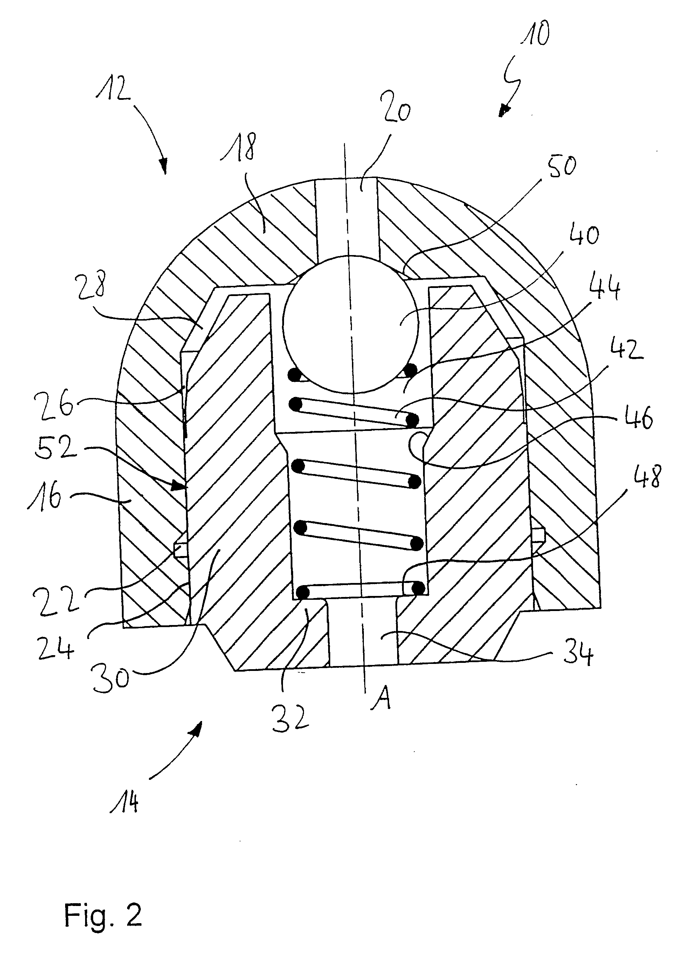

In Fig. 2 ist das Ventil 10 im teilmontierten Zustand abgebildet. Im teilmontierten Zustand ist der Federkäfig 14 in den Ventilkörper 12 eingepresst. Die hierfür erforderliche Einpresskraft hängt von der Formgebung des Außenumfangs des Federkäfigs 14 sowie der Formgebung des Innendurchmessers des Ventilkörpers 12 ab. Im vorliegenden Fall wurden Ventilkörper 12 und Federkäfig 14 derart ausgelegt, dass die zum Ausbilden eines Presssitzes 52 erforderliche Einpresskraft bei Temperaturen von unterhalb 80°C stets eine sichere Verbindung von Federkäfig 14 und Ventilkörper 12 gewährleistet. Hierbei ist zu berücksichtigen, dass die Einpresskraft auf jeden Fall höher als die Rückstellkraft der komprimierten Schraubenfeder 42 gewählt werden muss.

Im Anschluss an das Ausbilden des Presssitzes 52 muss eine formschlüssige Verbindung zwischen dem Federkäfig 14 und dem Ventilkörper 12 hergestellt werden. Das Ausbilden des Formschlusses erfolgt jedoch nicht bereits bei der Produktion des Ventils 10, sondern erst bei dessen erster Inbetriebnahme, d.h. erst in eingebautem Zustand. Das Ventil 10 wird also in der in Fig. 2 dargestellten Montagestellung geliefert und eingebaut.

Bei der ersten Inbetriebnahme des Ventils 10 wird das Ventil 10 mit einem fluiden Medium mit einer Temperatur von 80°C beaufschlagt bzw. durchströmt. Dabei erwärmt sich das Ventil 10 ebenfalls auf eine Betriebstemperatur von 80°C. Aufgrund dieser Erwärmung des Ventils 10 kommt es zu einer Ausdehnung sowohl von Ventilkörper 12 als auch von Federkäfig 14. Da jedoch der thermische Ausdehnungskoeffizient $\alpha_i$ des Federkäfigs 14 größer ist als derjenige des Ventilkörpers 12, dehnt sich der Federkäfig 14 stärker aus als der Ventilkörper 12. Infolge dieses unterschiedlichen Ausdehnungsverhaltens fließt das Kunststoffmaterial des Federkäfigs 14 bereichsweise in die Nut 22 des Ventilkörpers 12. Es bildet sich daher eine formschlüssige Verbindung 54 zwischen dem Federkäfig 14 und dem Ventilkörper 12 aus.

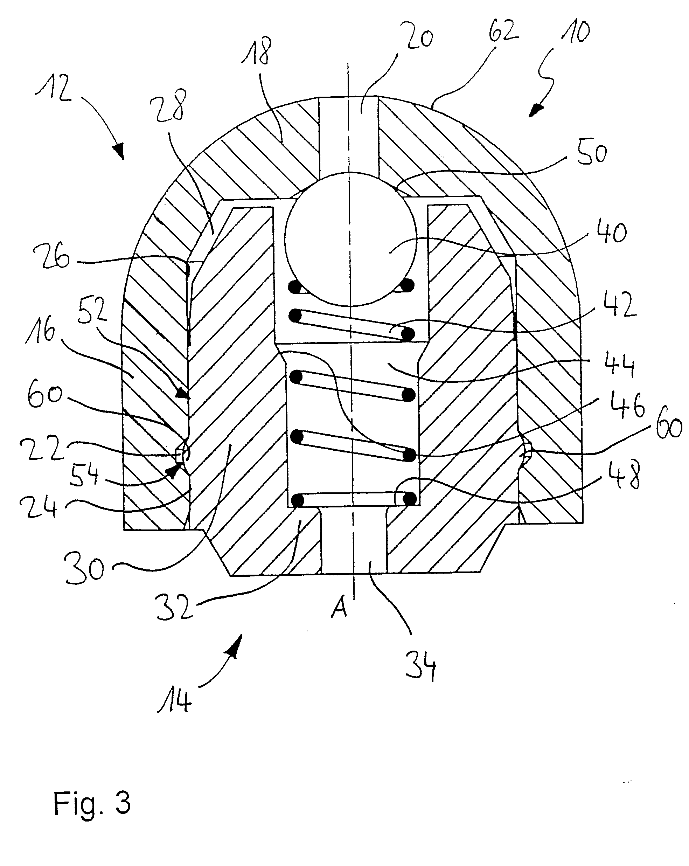

Dieser Sachverhalt ist in Fig. 3 dargestellt. Deutlich zu erkennen sind die auf die unterschiedlichen Wärmeausdehnungskoeffizienten bzw. das Fließverhalten des Materials des Federkäfigs 14 zurückzuführenden Wölbungen 60 im Bereich des Außenumfangs des Federkäfigs 14. Die Wölbungen 60 greifen formschlüssig in die Nut 22 des Ventilkörpers 12 ein und bleiben auch nach dem Abkühlen des Ventils 10 auf Umgebungstemperatur erhalten. Im Anschluss an die erste Inbetriebnahme des Ventils 10 ist damit der erfindungsgemäße Bauteilverbund hergestellt.

Bei dem in Fig. 3 dargestellten Ventil 10 handelt es sich um ein Rückschlagventil. Ein Öffnen des Ventils 10, d.h. ein Abheben der Kugel 40 von dem Ventilsitz 50, kann entweder mittels eines Vordrucks oder mittels einer durch die Durchtrittsöffnung 20 ragenden und mit der Kugel 40 zusammenwirkenden Kolbenstange erfolgen. Die äußere Oberfläche 62 des kalottenförmigen Bereichs 18 des Ventilkörpers 12 kann als weiterer Ventilsitz fungieren. Das Ventil 10 kann daher in komplexen Fluidik-Steuersystemen, beispielsweise im Bereich einer Fahrzeugbremsanlage, zum Einsatz gelangen.

Obwohl die Erfindung beispielhaft anhand eines Ventils 10 beschrieben wurde, lassen sich mittels des erfindungsgemäßen Fertigungsverfahrens hergestellte Bauteilverbunde auch im Bereich des allgemeinen Maschinenbaus sowie in anderen Bereichen einsetzen.

**Patentansprüche**

1. Bauteilverbund, insbesondere Ventil (10), mit einem inneren Bauteil (14) und einem das innere Bauteil (14) radial außen umgebenden äußeren Bauteil (12), wobei das äußere Bauteil (12) radial innen mindestens eine, dem inneren Bauteil (14) zugewandte Innendurchmessererweiterung (22) besitzt und wobei das innere Bauteil (14) mittels eines Presssitzes (52) an dem äußeren Bauteil (12) befestigt ist, **dadurch gekennzeichnet, dass** das innere Bauteil (14) zumindest radial außen aus einem Material mit einem ersten thermischen Ausdehnungskoeffizienten ($\alpha_i$) und das äußere Bauteil (12) zumindest radial innen aus einem Material mit einem zweiten thermischen Ausdehnungskoeffizienten ($\alpha_a$), der kleiner ist als der erste thermische Ausdehnungskoeffizient ($\alpha_i$), gefertigt ist, und dass das innere Bauteil (14) auch mittels eines Formschlusses (54), der durch ein wärmeinduziertes Fließen des inneren Bauteils (14) in die Innendurchmessererweiterung (22) des äußeren Bauteils (12) ausgebildet ist, an dem äußeren Bauteil (12) befestigt ist.

2. Bauteil nach Anspruch 1, **dadurch gekennzeichnet, dass** das äußere Bauteil ein Ventilkörper (12) ist.

3. Bauteilverbund nach Anspruch 2, **dadurch gekennzeichnet, dass** der Ventilkörper einen inneren (50) und/oder einen äußeren (62) Ventilsitz aufweist.

4. Bauteilverbund nach Anspruch 3, **dadurch gekennzeichnet, dass** das Ventil (10) ein mit dem inneren Ventilsitz (50) zusammenwirkendes Ventilelement (40) umfasst.

5. Bauteilverbund nach Anspruch 4, **dadurch gekennzeichnet, dass** das Ventil (10) ein elastisches Element (42) umfasst, welches das Ventilelement (40) gegen den inneren Ventilsitz (50) vorspannt.

6. Bauteilverbund nach Anspruch 5, **dadurch gekennzeichnet, dass** das innere Bauteil ein Käfig (14) ist und das elastische Element (42) sich einerseits an dem Käfig (14) und andererseits an dem Ventilelement (40) abstützt.

7. Bauteilverbund nach einem der Ansprüche 1 bis 6, **dadurch gekennzeichnet, dass** die mindestens eine Innendurchmessererweiterung (22) zumindest abschnittsweise von Bereichen (24, 26) mit geringerem Innendurchmesser umgeben ist, um ein unbeabsichtigtes Lösen der formschlüssigen Verbindung zwischen innerem Bauteil (14) und äußerem Bauteil (12) zu verhindern.

8. Bauteilverbund nach einem der Ansprüche 1 bis 7, **dadurch gekennzeichnet, dass** die mindestens eine Innendurchmessererweiterung (22) eine in Richtung des Innenumfangs des äußeren Bauteils (12) verlaufende, bereichsweise ausgebildete oder vollständig umlaufende Nut (22) ist.

9. Bauteilverbund nach einem der Ansprüche 1 bis 8, **dadurch gekennzeichnet, dass** das innere Bauteil (14) und/oder das äußere Bauteil (12) in Umfangsrichtung eine geschlossene Kontur besitzen.

10. Bauteilverbund nach einem der Ansprüche 1 bis 9, **dadurch gekennzeichnet, dass** das innere Bauteil (14) und/oder das äußere Bauteil (12) im Wesentlichen zylindrisch oder ringförmig ausgebildet sind.

11. Bauteilverbund nach einem der Ansprüche 1 bis 10, **dadurch gekennzeichnet, dass** das innere Bauteil (14) und/oder das äußere Bauteil (12) einen im Wesentlichen kreisringförmigen Querschnitt besitzen.

12. Bauteilverbund nach einem der Ansprüche 1 bis 11, **dadurch gekennzeichnet, dass** das innere Bauteil (14) koaxial zum äußeren Bauteil (12) angeordnet ist.

13. Bauteilverbund nach einem der Ansprüche 1 bis 12, **dadurch gekennzeichnet, dass** das innere Bauteil (14) zumindest radial außen aus Kunststoff gefertigt ist.

14. Bauteilverbund nach einem der Ansprüche 1 bis 13, **dadurch gekennzeichnet, dass** das äußere Bauteil (12) zumindest radial innen aus Metall gefertigt ist.

15. Verfahren zum Fertigen eines Bauteilverbunds, insbesondere eines Ventils (10), durch Befestigen eines inneren Bauteils (14) an einem das innere Bauteil (14) radial außen umgebenden äußeren Bauteil (12), wobei das äußere Bauteil (12) radial innen mindestens eine, dem inneren Bauteil (14) zugewandte Innendurchmessererweiterung (22) besitzt, enthaltend:

    - Verbinden der beiden Bauteile (12, 14) durch Einpressen des inneren Bauteils (14) in das äußere Bauteil (12) zum Ausbilden eines Presssitzes (52); **gekennzeichnet durch** den Schritt des

    - Ausbildens eines Formschlusses (54) **durch** Erwärmen der verbundenen Baueile (12, 14) derart, dass das innere Bauteil (14) zumindest bereichsweise in die Innendurchmessererweiterung (22) des äußeren Bauteils (12) fließt, wobei das innere Bauteil (14) zumindest radial außen aus einem Material mit einem ersten thermischen Ausdehnungskoeffizienten ($\alpha_i$) und das äußere Bauteil (12) zumindest radial innen aus einem Material mit einem zweiten thermischen Ausdehnungskoeffizienten ($\alpha_a$), der kleiner ist als der erste thermische Ausdehnungskoeffizient ($\alpha_i$), gefertigt ist.

**16.** Verfahren nach Anspruch 15,
**dadurch gekennzeichnet, dass** das Erwärmen der beiden verbundenen Bauteile (12, 14) zum Ausbilden des Formschlusses (54) im Rahmen der Inbetriebnahme des Bauteilverbunds (10) erfolgt.

**17.** Verfahren nach Anspruch 16,
**dadurch gekennzeichnet, dass** bei der Inbetriebnahme Temperaturen des Bauteilverbunds (10) von mehr als 70°C erreicht werden.

**18.** Verfahren nach Anspruch 15,
**dadurch gekennzeichnet, dass** das Erwärmen der beiden verbundenen Bauteile (12, 14) zum Ausbilden des Formschlusses (54) in einem separaten Erwärmungsschritt vor Inbetriebnahme des Bauteilverbunds (10) erfolgt.

**19.** Verfahren nach einem der Ansprüche 15 bis 18,
**dadurch gekennzeichnet, dass** die Einpresskraft in Abhängigkeit von den Materialien der Bauteile (12, 14) derart gering gewählt wird, dass der Presssitz (52) beschädigungslos ausgebildet wird.

**20.** Verfahren nach einem der Ansprüche 15 bis 19,
**dadurch gekennzeichnet, dass** die Einpresskraft in Abhängigkeit von den Materialien der beiden Bauteile (12, 14) derart hoch gewählt wird, dass in einem Temperaturbereich von unterhalb 80°C ein zuverlässiger Presssitz (52) gewährleistet wird.

**21.** Verfahren nach einem der Patentansprüche 15 bis 20,
**dadurch gekennzeichnet, dass** das Material des inneren Bauteils (14) derart gewählt ist, dass das innere Bauteil (14) bei 70°C die Innendurchmessererweiterung (22) des äußeren Bauteils (12) zu füllen beginnt.

**22.** Verfahren nach einem der Patentansprüche 15 bis 21,
**dadurch gekennzeichnet, dass** der Presssitz (52) und der Formschluss (54) derart ausgebildet werden, dass in einem Temperaturbereich von -40°C bis 125°C eine zuverlässige Verbindung zwischen dem inneren Bauteil (14) und dem äußeren Bauteil (12) gewährleistet wird.

**Claims**

**1.** Composite component, in particular valve (10), having an inner component (14) and an outer component (12), which encloses the inner component (14) radially outwards, the outer component (12) having at least one internal-diameter enlargement (22) radially inwards, facing the inner component (14), and the inner component (14) being fastened to the outer component (12) by means of a press fit (52), **characterized in that**
the inner component (14) is made at least radially outwards of a material with a first coefficient of thermal expansion ($\alpha_i$) and the outer component (12) is made at least radially inwards of a material with a second coefficient of thermal expansion ($\alpha_a$), which is smaller than the first coefficient of thermal expansion ($\alpha_i$), and that the inner component (14) is fastened to the outer component (12) also by means of a positive engagement (54) which is formed by a thermally induced flow of the inner component (14) into the internal-diameter enlargement (22) of the outer component (12).

**2.** Component according to Claim 1, **characterized in that** the outer component is a valve body (12).

**3.** Composite component according to Claim 2, **characterized in that** the valve body has an inner valve seat (50) and/or an outer valve seat (62).

**4.** Composite component according to Claim 3, **characterized in that** the valve (10) comprises a valve element (40) which cooperates with the inner valve seat (50).

**5.** Composite component according to Claim 4, **characterized in that** the valve (10) comprises an elastic element (42) which biases the valve element (40) against the inner valve seat (50).

**6.** Composite component according to Claim 5, **characterized in that** the inner component is a cage (14) and the elastic element (42) is supported, on the one hand, on the cage (14) and, on the other hand, on the valve element (40).

**7.** Composite component according to one of Claims 1 to 6, **characterized in that** the at least one internal-diameter enlargement (22) is enclosed at least partially by regions (24, 26) with a smaller internal diameter, in order to prevent accidental loosening of the positive-engagement connection between the inner component (14) and the outer component (12).

8. Composite component according to one of Claims 1 to 7, **characterized in that** the at least one internal-diameter enlargement (22) is a locally formed or fully circumferential groove (22) extending in the direction of the inner circumference of the outer component (12).

9. Composite component according to one of Claims 1 to 8, **characterized in that** the inner component (14) and/or the outer component (12) has/have a continuous contour in circumferential direction.

10. Composite component according to one of Claims 1 to 9, **characterized in that** the inner component (14) and/or the outer component (12) is/are substantially cylindrical or ring-shaped.

11. Composite component according to one of Claims 1 to 10, **characterized in that** the inner component (14) and/or the outer component (12) has/have a substantially annular cross section.

12. Composite component according to one of Claims 1 to 11,
**characterized in that** the inner component (14) is arranged coaxially with respect to the outer component (12).

13. Composite component according to one of Claims 1 to 12,
**characterized in that** the inner component (14) is made of plastic at least radially outwards.

14. Composite component according to one of Claims 1 to 13,
**characterized in that** the outer component (12) is made of metal at least radially inwards.

15. Method for the manufacture of a composite component, in particular a valve (10), by fastening an inner component (14) to an outer component (12) which encloses the inner component (14) radially outwards, the outer component (12) having at least one internal-diameter enlargement (22) radially inwards, facing the inner component (14), the method comprising:

- connecting the two components (12, 14) by pressing the inner component (14) into the outer component (12), in order to form a press fit (52);

**characterized by** the step of

- forming a positive engagement (54) by heating the connected components (12, 14) in such a manner that the inner component (14) flows at least locally into the internal-diameter enlargement (22) of the outer component (12), the inner component (14) being made at least radially outwards of a material with a first coefficient of thermal expansion ($\alpha_i$) and the outer component (12) being made at least radially inwards of a material with a second coefficient of thermal expansion ($\alpha_a$), which is smaller than the first coefficient of thermal expansion ($\alpha_i$).

16. Method according to Claim 15, **characterized in that** the heating of the two connected components (12, 14) in order to form the positive engagement (54) takes place in the scope of running-in the composite component (10).

17. Method according to Claim 16, **characterized in that** temperatures of the composite component (10) in excess of 70°C are reached during the running-in.

18. Method according to Claim 15, **characterized in that** the heating of the two connected components (12, 14) in order to form the positive engagement (54) takes place in a separate heating step before running-in the composite component (10).

19. Method according to one of Claims 15 to 18, **characterized in that** the pressing force is selected to be low enough, depending on the materials of the components (12, 14), so that the press fit (52) is formed without causing damage.

20. Method according to one of Claims 15 to 19, **characterized in that** the pressing force is selected to be large enough, depending on the materials of the two components (12, 14), so that a reliable press fit (52) is guaranteed in a temperature range of below 80°C.

21. Method according to one of Claims 15 to 20, **characterized in that** the material of the inner component (14) is selected such that the inner component (14) starts to fill the internal-diameter enlargement (22) of the outer component (12) at 70°C.

22. Method according to one of Claims 15 to 21, **characterized in that** the press fit (52) and the positive engagement (54) are formed in such a way that a reliable connection between the inner component (14) and the outer component (12) is guaranteed in a temperature range of from -40°C to 125°C.

**Revendications**

1. Pièce composite, notamment une soupape (10), comprenant une pièce intérieure (14) et une pièce extérieure (12) entourant dans le sens radial, à l'extérieur, la pièce intérieure (14), la pièce extérieure (12) comportant à l'intérieur, dans le sens radial, au moins un élargissement du diamètre intérieur (22) faisant face à la pièce intérieure (14), et la pièce intérieure (14) étant reliée à la pièce extérieure (12) par ajustage serré (52), **caractérisé en ce que** la pièce intérieure (14) se compose au moins dans le sens radial, à l'extérieur, d'un matériau ayant un premier coefficient de dilatation thermique ($a_i$) et la pièce extérieure (12) se compose au moins dans le sens radial, à l'intérieur, d'un matériau ayant un second coefficient de dilatation thermique ($a_a$) inférieur au premier coefficient de dilatation thermique ($a_i$), et **en ce que** la pièce intérieure (14) est reliée à la pièce extérieure (12) par liaison de forme (54) obtenue par écoulement, sous l'effet de la chaleur, de la pièce intérieure (14) dans l'élargissement du diamètre intérieur (22) de la pièce extérieure (12).

2. Pièce selon la revendication 1,
   **caractérisée en ce que** la pièce extérieure constitue un corps de soupape (12).

3. Pièce composite selon la revendication 2,
   **caractérisée en ce que** le corps de soupape présente un siège de soupape intérieur (50) et/ou un siège de soupape extérieur (62).

4. Pièce composite selon la revendication 3,
   **caractérisée en ce que** la soupape (10) comprend un organe de soupape (40) coopérant avec le siège intérieur (50) de la soupape.

5. Pièce composite selon la revendication 4,
   **caractérisée en ce que** la soupape (10) comprend un organe élastique (42) lequel presse l'organe de soupape (40) contre le siège intérieur (50) de la soupape.

6. Pièce composite selon la revendication 5,
   **caractérisée en ce que** la pièce intérieure constitue une cage (14) et l'organe élastique (42) s'appuie d'une part sur la cage (14) et d'autre part sur l'organe de soupape (40).

7. Pièce composite selon l'une des revendications 1 à 6,
   **caractérisée en ce que** ledit élargissement du diamètre intérieur (22) est pour le moins pour partie entouré par des zones (24, 26) d'un plus faible diamètre intérieur pour empêcher le desserrage intempestif de la liaison de forme entre la pièce intérieure (14) et la pièce extérieure (12).

8. Pièce composite selon l'une des revendications 1 à 7,
   **caractérisée en ce que** ledit élargissement du diamètre intérieur (22) constitue une gorge (22) périmétrique complètement ou partiellement formée et courant dans le sens de la circonférence intérieure de la pièce extérieure (12).

9. Pièce composite selon l'une des revendications 1 à 8,
   **caractérisée en ce que** la pièce intérieure (14) et/ou la pièce extérieure (12) présentent un contour fermé dans le sens circonférentiel.

10. Pièce composite selon l'une des revendications 1 à 9,
    **caractérisée en ce que** la pièce intérieure (14) et/ou la pièce extérieure (12) se présentent pour l'essentiel sous une forme cylindrique ou annulaire.

11. Pièce composite selon l'une des revendications 1 à 10,
    **caractérisée en ce que** la pièce intérieure (14) et/ou la pièce extérieure (12) présentent pour l'essentiel une section torique.

12. Pièce composite selon l'une des revendications 1 à 11,
    **caractérisée en ce que** la pièce intérieure (14) est disposée de manière coaxiale par rapport à la pièce extérieure (12).

13. Pièce composite selon l'une des revendications 1 à 12,
    **caractérisée en ce que** la pièce intérieure (14) se compose pour le moins dans le sens radial, à l'extérieur, d'un matériau synthétique.

14. Pièce composite selon l'une des revendications 1 à 13,
    **caractérisée en ce que** la pièce extérieure (12) se compose pour le moins dans le sens radial, à l'intérieur, de métal.

15. Procédé permettant de fabriquer une pièce composite, notamment une soupape (10), en reliant une pièce intérieure (14) à une pièce extérieure (12) entourant dans le sens radial, à l'extérieur, la pièce intérieure (14), la pièce extérieure (12) comportant à l'intérieur, dans le sens radial, au moins un élargissement du diamètre intérieur (22) faisant face à la pièce intérieure (14), comprenant :

    - l'assemblage des deux pièces (12, 14) par pressage de la pièce intérieure (14) dans la pièce extérieure (12) pour former un ajustement serré (52) ;

      **caractérisé par** l'étape consistant à

- obtenir une liaison de forme (54) par échauffement des pièces assemblées (12, 14) de sorte telle que la pièce intérieure (14) coule pour le moins par endroits dans l'élargissement du diamètre intérieur (22) de la pièce extérieure (12), la pièce intérieure (14) étant composée au moins dans le sens radial, à l'extérieur, d'un matériau ayant un premier coefficient de dilatation thermique $(a_i)$ et la pièce extérieure (12) étant composée au moins dans le sens radial, à l'intérieur, d'un matériau ayant un second coefficient de dilatation thermique $(a_a)$ inférieur au premier coefficient de dilatation thermique $(a_i)$.

16. Procédé selon la revendication 15, **caractérisé en ce que** l'échauffement des deux pièces assemblées (12, 14) en vue de l'obtention de la liaison de forme (54) s'effectue dans le cadre de la mise en service de la pièce composite (10).

17. Procédé selon la revendication 16, **caractérisé en ce que** les températures de la pièce composite (10) atteignent plus de 70°C lors de ladite mise en service.

18. Procédé selon la revendication 15, **caractérisé en ce que** l'échauffement des deux pièces assemblées (12, 14) en vue de l'obtention de la liaison de forme (54) s'effectue dans le cadre d'une étape d'échauffement distincte, avant la mise en service de la pièce composite (10).

19. Procédé selon l'une des revendications 15 à 18, **caractérisé en ce que** la force de pressage choisie en fonction des matériaux composant les pièces (12, 14) est si faible qu'elle permet la formation d'un ajustage serré (52) sans détérioration.

20. Procédé selon l'une des revendications 15 à 19, **caractérisé en ce que** la force de pressage choisie en fonction des matériaux composant les pièces (12, 14) est si élevée qu'elle permet la formation d'un ajustage serré (52) fiable dans une plage de température située en dessous de 80°C.

21. Procédé selon l'une des revendications 15 à 20, **caractérisé en ce que** le matériau de la pièce intérieure (14) est choisi de sorte telle que la pièce intérieure (14) commence, à 70°C, à remplir l'élargissement du diamètre intérieur (22) de la pièce extérieure (12).

22. Procédé selon l'une des revendications 15 à 21, **caractérisé en ce que** l'ajustage serré (52) et la liaison de forme (54) sont formés de sorte à garantir, dans une plage de température allant de -40°C à 125°C, l'obtention d'une liaison fiable entre la pièce intérieure (14) et la pièce extérieure (12).

Fig. 1

Fig. 2

Fig. 3